# EUROPEAN PATENT SPECIFICATION

(11) **EP 4 372 290 B1**
(45) Date of publication and mention of the grant of the patent: **14.01.2026**
(21) Application number: 23178384.6
(22) Date of filing: 09.06.2023
(51) Int. Cl.: F24F 6/12, F04D 25/08, F24F 7/007, F24F 11/30

(54) **HUMIDIFIER WITH IMPROVED CONTROL AND FLOOR-STANDING FAN**
BEFEUCHTER MIT VERBESSERTER STEUERUNG UND BODENSTEHENDER LÜFTER
HUMIDIFICATEUR AVEC COMMANDE AMÉLIORÉE ET VENTILATEUR AU SOL

(30) Priority: 15.11.2022 CN 202211430073
(43) Date of publication of application: 22.05.2024
(73) Proprietor: Zhongshan Hongguan West Union Electric Technology Co., Ltd, Zhongshan City China, Guangdong (CN)
(72) Inventor: Li, YuYing, Zhongshan City (CN); Li, YuBin, Zhongshan City (CN)
(74) Representative: Longoni, Alessandra

(56) References cited:
- WO-A1-2019/037377
- CN-A- 101 149 174
- CN-A- 102 374 617
- CN-A- 111 023 307
- CN-A- 111 156 638
- CN-A- 112 746 982
- CN-U- 214 746 166

## Description

### TECHNICAL FIELD

The present invention relates to a humidifier.

### BACKGROUND

The prior art discloses a novel water drain control device for a humidifier, including a water drain structure, a support frame and a rotating shaft. The water drain structure is composed of a float, a valve rod, a spring and a water baffle. The water baffle, the valve rod and the spring are mounted on a bottom of a water tank. The spring is sleeved on the valve rod. A lower end of the valve rod abuts against a support rod end of the float, and an upper end of the valve rod is connected to the water baffle. The float, the support frame and the rotating shaft are mounted on a water chamber. The float is fixed on the support frame through the rotating shaft, and the float can swing up and down around the rotating shaft. However, the problem is that when the water tank is separated from a base, an atomizing plate is still working, resulting in safety hazards
From Patent Publication CN102374617_A and WO2019-037377_A1 humidifiers are known wherein devices are provided to avoid working of the atomizing plate when the water tank is separated from the base.
Both the Patent Publications provide solutions to the problem of avoiding working of the atomizing plate but both Patent Publications provide different and incompatible technical solutions.

### SUMMARY

It is an object of the present invention to provide a humidifier with improved control which is characterized in that an atomizing plate stops operating when a water tank is separated from a base. In the following passages, the term "disclosure" refers to the invention as described in the description; the scope of the invetion is defined by the claims.

The present disclosure is implemented as follows. A humidifier with improved control includes a water tank, a base, an ultrasonic high-frequency atomizing plate, a float assembly, a drain valve and a control panel, the base being provided thereon with an atomizing chamber having an upper opening and an atomizing plate mounting base arranged on a bottom plate of the atomizing chamber, the drain valve being arranged on a bottom plate of the water tank, and the water tank detachably fits with the atomizing chamber, wherein the bottom plate of the atomizing chamber is further provided with a support seat frame and a spring seat hole.

The humidifier further includes a guide seat plate, a floating frame, a float block, a magnet, a spring and a magnetic signal generator.

The guide seat plate is fixed on the support seat frame, the magnet is pre-embedded in the floating block, and the floating block is fixed in the floating frame. The floating frame slidably fits with a guide hole on the guide seat plate. A lower end of the spring is arranged in the spring seat hole while an upper end fits with a lower end of the floating frame. A top of the floating frame fits with the bottom plate of the water tank. The magnetic signal generator is arranged inside the atomizing chamber and fits with the magnet.

The humidifier with improved control is special in that the magnetic signal generator is a reed switch or a Hall sensor.

The humidifier with improved control is special in that the top of the floating frame is provided with a transmission rod, and the transmission rod fits with the bottom plate of the water tank.

The humidifier with improved control is special in that the drain valve includes a valve core, a valve rod, a pressure spring and a valve seat arranged on the bottom plate of the water tank;
the valve seat includes a valve chamber having an upper opening and a water guide seat plate arranged on a lower part of the valve chamber, the water guide seat plate is formed thereon with a guide hole along an axial line and a water guide hole arranged surrounding the guide hole;
the valve rod passes through the pressure spring and the guide hole to connect to the valve core, and the valve core fits with an upper end of the valve chamber; and
the float assembly drives the valve rod and the drain valve to turn on.

The humidifier with improved control is special in that the float assembly includes a seat body and a float;
the seat body is provided with a chamber body having an upper opening and a lateral opening, and a side wall plate at the lateral opening is formed with a half-shaft hole;
the float is provided with a rotating seat, and the rotating seat is provided with half-shafts on two sides thereof and a driving rod on a top thereof; and
the rotating seat extends into the seat body through the lateral opening, the half-shaft rotatably fits with the half-shaft hole, and the driving rod fits with the valve rod.

A floor-standing fan includes a pedestal, a vertical pipe, a control box, a fan head and the humidifier as described above.

The base is provided with a vertical pipe seat, and the base extends toward the periphery in a circular direction to form a pedestal shell having a lower opening, and the pedestal is embedded into the pedestal shell.

A floor-standing fan includes a pedestal, a vertical pipe, a control box, a fan head, a mist guide pipe and the humidifier as described above. The control box includes a front box body having a rear opening and a rear box body having a front opening.

The front box body having an upper part formed with a front pipe outlet hole and a lower part formed with a front pipe inlet hole, the rear box body is formed with a recess having a rear opening, and the recess having a lower part formed with a rear pipe outlet hole and an upper part formed with a rear pipe inlet hole;

The mist guide pipe enters the control box through the front pipe inlet hole, enters the recess through the rear pipe outlet hole and is embedded into the recess, enters the control box through the rear pipe inlet hole and extends out of the control box through the front pipe outlet hole.

According to the humidifier with improved control of the present disclosure, when the water tank is separated from the base, the spring stretches, the floating frame moves upward, the magnet fits with the magnetic signal generator, and the control panel controls the atomizing plate to stop operating, thereby eliminating safety hazards.

### BRIEF DESCRIPTION OF THE DRAWINGS

FIG. 1 is a first exploded perspective view according to the present disclosure.
FIG. 2 is a second exploded perspective view according to the present disclosure.
FIG. 3 is a sectional perspective view of a water tank according to the present disclosure.
FIG. 4 is a sectional view of a water tank fitting with a drain valve according to the present disclosure.
FIG. 5 is a sectional view of a floor-standing fan according to the present disclosure.
FIG. 6 is a perspective view of a floor-standing fan according to the present disclosure.
FIG. 7 is an exploded perspective view of a floor-standing fan according to the present disclosure.
FIG. 8 is a perspective view of a front box body of a floor-standing fan according to the present disclosure.
FIG. 9 is a first perspective view of a rear box body of a floor-standing fan according to the present disclosure.
FIG. 10 is a second perspective view of a rear box body of a floor-standing fan according to the present disclosure.

### DETAILED DESCRIPTION OF THE EMBODIMENTS

A detailed description is provided below of embodiments of the present disclosure, examples of which embodiments are shown in the accompanying drawings on which the same or similar designator are used for representing the same or similar elements or the elements having the same or similar functions. Those embodiments described below with reference to the accompanying drawings are exemplary, which are merely to illustrate the present disclosure and cannot be understood as a restriction to the present disclosure.

### Embodiment 1

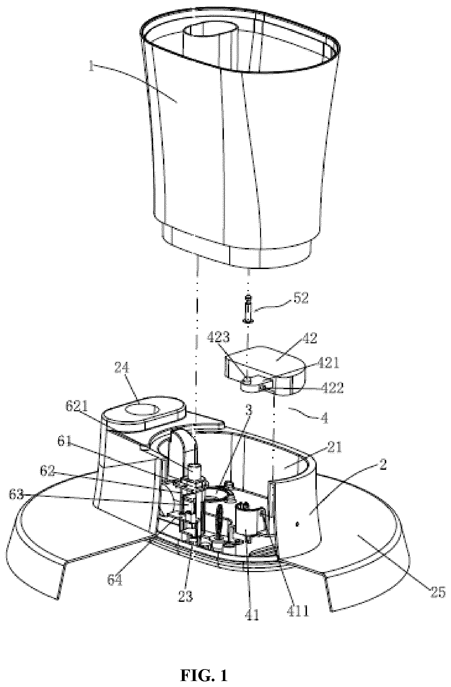

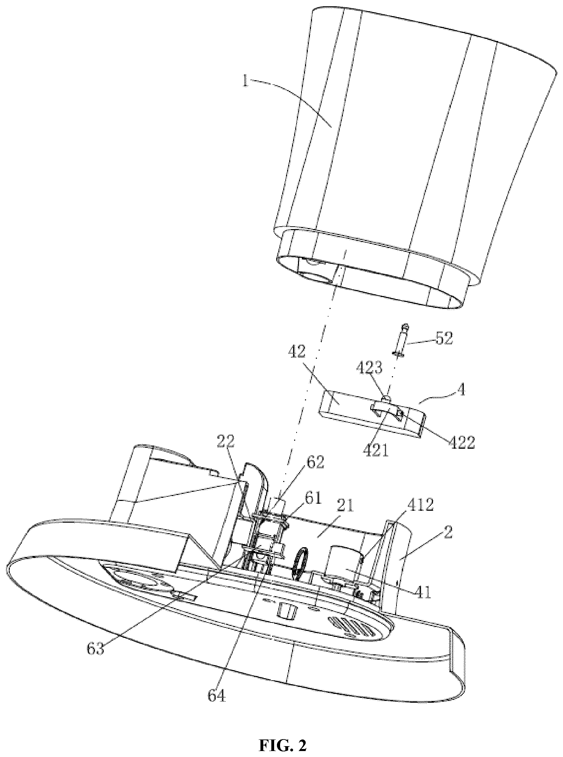

As shown in FIG. 1, FIG. 2 and FIG. 4, a humidifier with improved control includes a water tank 1, a base 2, an ultrasonic high-frequency atomizing plate 3, a float assembly 4, a drain valve 5 and a control panel (not shown in figures). The base 2 is provided thereon with an atomizing chamber 21 having an upper opening and an atomizing plate mounting base (not shown in figures) arranged on a bottom plate of the atomizing chamber 21. The drain valve 5 is arranged on a bottom plate of the water tank 1, and the water tank 1 detachably fits with the atomizing chamber 21. The bottom plate of the atomizing chamber 21 is further provided with a support seat frame 22 and a spring seat hole 23.

The humidifier further includes a guide seat plate 61, a floating frame 62, a float block 63, a magnet (not shown in figures), a spring and a magnetic signal generator 64.

The guide seat plate 61 is fixed on the support seat frame, the magnet is pre-embedded in the floating block 63, and the floating block 63 is fixed in the floating frame 62. The floating frame 62 slidably fits with a guide hole on the guide seat plate 61 and move up and down, a lower end of the spring is arranged in the spring seat hole 23 while an upper end fits with a lower end of the floating frame 62. A top of the floating frame 62 fits with the bottom plate of the water tank 1, and the magnetic signal generator 64 is arranged inside the atomizing chamber 21 and fits with the magnet.

The magnetic signal generator 64 is a reed switch or a Hall sensor.

The top of the floating frame 62 is provided with a transmission rod 621, and the transmission rod 621 fits with the bottom plate of the water tank 1.

When the water tank 1 is fastened to the atomizing chamber 21 of the base 2, the bottom plate of the water tank 1 fits with the transmission rod 621, the spring is compressed, and the magnet is staggered from the magnetic signal generator 64. When the water tank is separated from the base, the floating frame 62 moves upward, the magnet is opposite to the magnetic signal generator 64, the magnetic signal generator 64 transmits a signal to the control panel, and the control panel powers off the ultrasonic high-frequency atomizing plate 3, whereby stopping operating. The safety is improved.

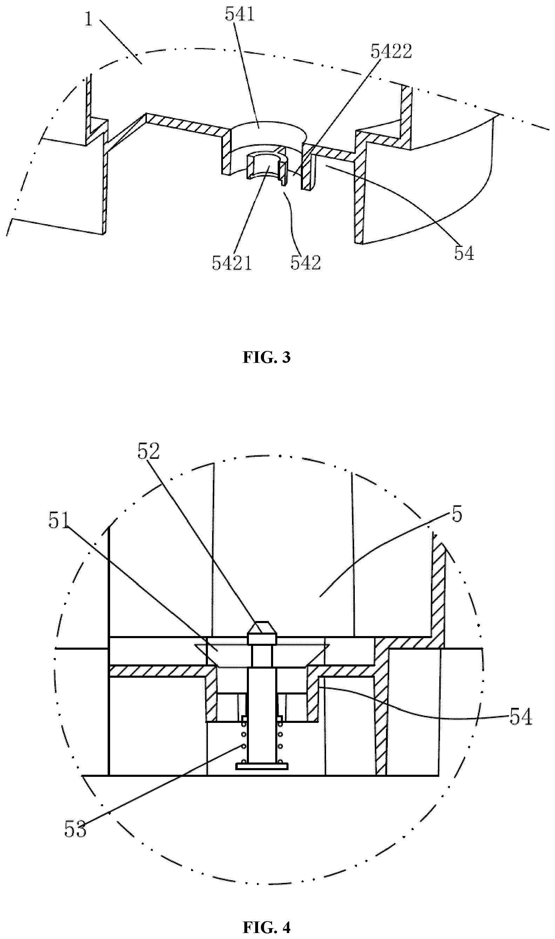

As shown in FIG. 4, the drain valve 5 includes a valve core 51, a valve rod 52, a pressure spring 53 and a valve seat 54 arranged on the bottom plate of the water tank 1.

The valve seat 54 includes a valve chamber 541 having an upper opening and a water guide seat plate 542 arranged on a lower part of the valve chamber, the water guide seat plate 542 is formed thereon with a guide hole 5421 along an axial line and a water guide hole 5422 arranged surrounding the guide hole.

The valve rod 52 passes through the pressure spring 53 and the guide hole 5421 to connect to the valve core 51, and the valve core 51 fits with an upper end of the valve chamber 541. The valve rod 52 has a lower end provided with a circular seat plate which supports the pressure spring 53.

The float assembly 4 drives the valve rod 52 and the drain valve 5 to turn on.

The float assembly 4 includes a seat body 41 and a float 42.

The seat body 41 is provided with a chamber body having an upper opening and a lateral opening, and a side wall plate at the lateral opening is formed with a half-shaft hole 411.

The float 42 is provided with a rotating seat 421, and the rotating seat is provided with half-shafts 422 on two sides thereof and a driving rod 423 on a top thereof.

The rotating seat 421 extends into the chamber body of the seat body 41 through the lateral opening, the half-shaft 422 rotatably fits with the half-shaft hole 411, and the driving rod 423 fits with the valve rod 52. When the water tank is fastened to the base 1, the driving rod 423 acts on the valve rod 52, the water inside the water tank enters the atomizing chamber 21 of the base. When the water tank is removed from the base, under the action of the pressure spring 53, the valve core 51 seals an upper end of the valve chamber 541.

### Embodiment 2

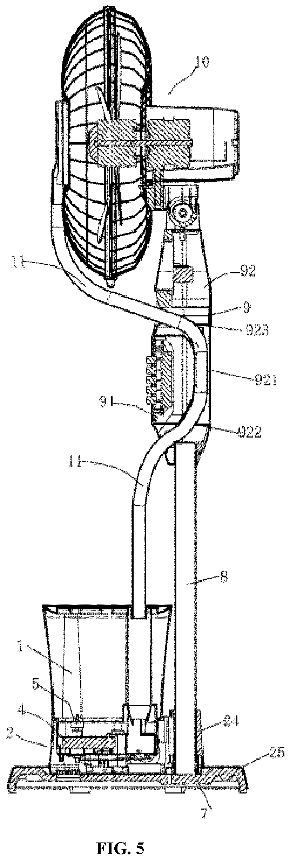

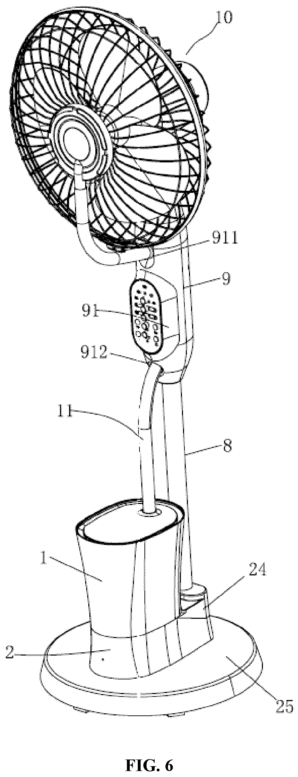

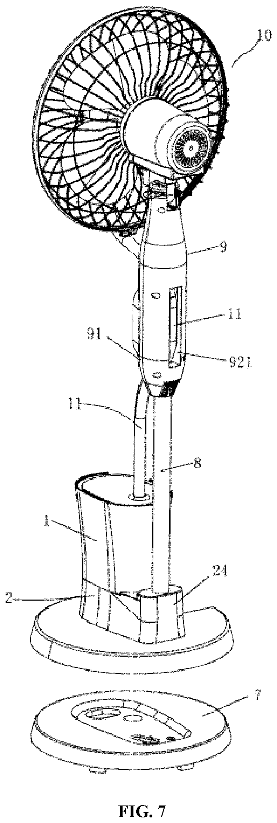

As shown in FIG. 5, FIG. 6 and FIG. 7, a floor-standing fan includes a pedestal 7, a vertical pipe 8, a control box 9, a fan head 10, a mist guide pipe 11 and the humidifier as described above.

The base 2 is provided with a vertical pipe seat 24, and the base 2 extends toward the periphery in a circular direction to form a pedestal shell 25 having a lower opening, and the pedestal 7 is embedded into the pedestal shell 25. Position relationships and connection relationships of other components have been disclosed in the Chinese patent entitled Top-added-water floor-standing humidifying fan.

### Embodiment 3

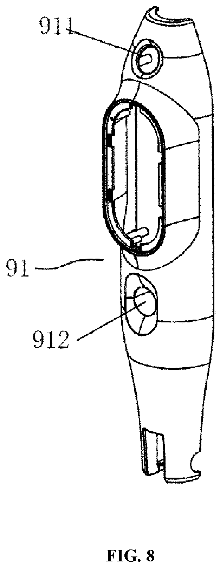

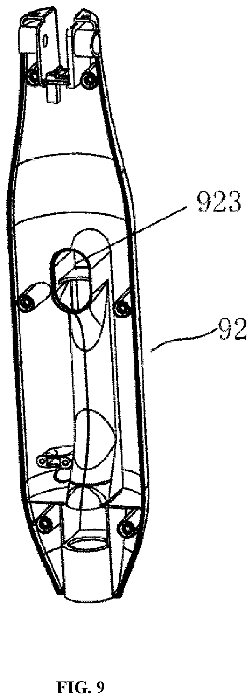

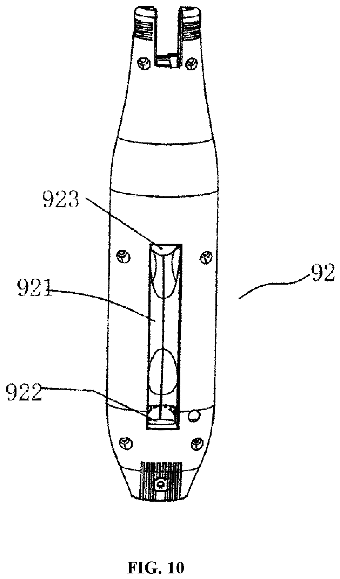

As shown in FIG. 5, FIG. 7, FIG. 8, FIG. 9 and FIG. 10, a floor-standing fan includes a pedestal 7, a vertical pipe 8, a control box 9, a fan head 10, a mist guide pipe 11 and the humidifier according to any one of claims 1 to 5. The control box 9 includes a front box body 91 having a rear opening and a rear box body 92 having a front opening.

The front box body 91 having an upper part formed with a front pipe outlet hole 911 and a lower part formed with a front pipe inlet hole 912, the rear box body 92 is formed with a recess 921 having a rear opening, and the recess having a lower part formed with a rear pipe outlet hole 922 and an upper part formed with a rear pipe inlet hole 923.

The mist guide pipe 11 enters the control box 9 through the front pipe inlet hole 912, enters the recess 921 through the rear pipe outlet hole 922 and is embedded into the recess 921, enters the control box 9 through the rear pipe inlet hole 923 and extends out of the control box 9 through the front pipe outlet hole 911, and then is connected to the fan head 10. With this structure, the length of the mist guide pipe 11 above or below the control box 9 can be adjusted.

## Claims

1. A humidifier with improved control, comprising a water tank (1), a base (2), an ultrasonic high-frequency atomizing plate (3), a float assembly (4), a drain valve (5) and a control panel, the base being provided thereon with an atomizing chamber (21) having an upper opening and an atomizing plate mounting base arranged on a bottom plate of the atomizing chamber, the drain valve being arranged on a bottom plate of the water tank, and the water tank detachably fits with the atomizing chamber, wherein the bottom plate of the atomizing chamber is further provided with a support seat frame (22) and a spring seat hole (23);
the humidifier further comprising a guide seat plate (61), a floating frame (62), a float block (63), a magnet, a spring and a magnetic signal generator (64), wherein
the guide seat plate is fixed on the support seat frame, the magnet is pre-embedded in the floating block, the floating block is fixed in the floating frame, the floating frame slidably fits with a guide hole on the guide seat plate, a lower end of the spring is arranged in the spring seat hole while an upper end fits with a lower end of the floating frame, a top of the floating frame fits with the bottom plate of the water tank, and the magnetic signal generator is arranged inside the atomizing chamber and fits with the magnet,
wherein
when the water tank is separated from the base, the magnetic signal generator (64) transmits a signal to the control panel, and the control panel powers off the ultrasonic high-frequency atomizing plate (3).

2. The humidifier with improved control according to claim 1, wherein the magnetic signal generator is a reed switch or a Hall sensor.

3. The humidifier with improved control according to claim 1, wherein the top of the floating frame is provided with a transmission rod (621), and the transmission rod fits with the bottom plate of the water tank.

4. The humidifier with improved control according to claim 1, 2 or 3, wherein the drain valve comprises a valve core (51), a valve rod (52), a pressure spring (53) and a valve seat (54) arranged on the bottom plate of the water tank;
the valve seat comprises a valve chamber (541) having an upper opening and a water guide seat plate (542) arranged on a lower part of the valve chamber, the water guide seat plate is formed thereon with a guide hole (5421) along an axial line and a water guide hole (5422) arranged surrounding the guide hole;
the valve rod passes through the pressure spring and the guide hole to connect to the valve core, and the valve core fits with an upper end of the valve chamber; and
the float assembly drives the valve rod and the drain valve to turn on.

5. The humidifier with improved control according to claim 4, wherein the float assembly comprises a seat body (41) and a float (42);
the seat body is provided with a chamber body having an upper opening and a lateral opening, and a side wall plate at the lateral opening is formed with a half-shaft hole (411);
the float is provided with a rotating seat (421), and the rotating seat is provided with half-shafts (422) on two sides thereof and a driving rod (423) on a top thereof; and
the rotating seat extends into the seat body through the lateral opening, the half-shaft rotatably fits with the half-shaft hole, and the driving rod fits with the valve rod.

6. A floor-standing fan, comprising a pedestal (7), a vertical pipe (8), a control box (9), a fan head (10), a mist guide pipe (11) and the humidifier according to any one of claims 1 to 5, wherein
the base is provided with a vertical pipe seat (24), and the base extends toward the periphery in a circular direction to form a pedestal shell (25) having a lower opening, and the pedestal is embedded into the pedestal shell.

7. A floor-standing fan, comprising a pedestal (7), a vertical pipe (8), a control box (9), a fan head (10), a mist guide pipe (11) and the humidifier according to any one of claims 1 to 5, wherein the control box comprising a front box body (91) having a rear opening and a rear box body (92) having a front opening;
the front box body having an upper part formed with a front pipe outlet hole (911) and a lower part formed with a front pipe inlet hole (912), the rear box body is formed with a recess (921) having a rear opening, and the recess having a lower part formed with a rear pipe outlet hole (922) and an upper part formed with a rear pipe inlet hole (923);
the mist guide pipe enters the control box through the front pipe inlet hole, enters the recess through the rear pipe outlet hole and is embedded into the recess, enters the control box through the rear pipe inlet hole and extends out of the control box through the front pipe outlet hole.

## Patentansprüche

1. Befeuchter mit verbesserter Steuerung, umfassend einen Wassertank (1), eine Basis (2), eine Ultraschall-Hochfrequenzzerstäuberplatte (3), eine Schwimmerbaugruppe (4), ein Ablassventil (5) und ein Bedienfeld, wobei die Basis darauf mit einer Zerstäuberkammer (21) versehen ist, die eine obere Öffnung und eine Zerstäuberplattenmontagebasis aufweist, die auf einer Bodenplatte der Zerstäuberkammer angeordnet ist, wobei das Ablassventil auf einer Bodenplatte des Wassertanks angeordnet ist und der Wassertank lösbar zu der Zerstäuberkammer passt, wobei die Bodenplatte der Zerstäuberkammer ferner mit einem Stützsitzrahmen (22) und einem Federsitzloch (23) versehen ist;
wobei der Befeuchter ferner eine Führungssitzplatte (61), einen schwimmenden Rahmen (62), einen Schwimmerblock (63), einen Magneten, eine Feder und einen Magnetsignalgenerator (64) umfasst, wobei
die Führungssitzplatte an dem Stützsitzrahmen befestigt ist, der Magnet in dem schwimmenden Block voreingebettet ist, der schwimmende Block in dem schwimmenden Rahmen befestigt ist, der schwimmende Rahmen gleitend zu einem Führungsloch an der Führungssitzplatte passt, ein unteres Ende der Feder in dem Federsitzloch angeordnet ist, während ein oberes Ende zu einem unteren Ende des schwimmenden Rahmens passt, eine Oberseite des schwimmenden Rahmens zu der Bodenplatte des Wassertanks passt und der Magnetsignalgenerator in der Zerstäubungskammer angeordnet ist und zu dem Magneten passt,
wobei,
wenn der Wassertank von der Basis getrennt ist, der Magnetsignalgenerator (64) ein Signal an das Bedienfeld überträgt und das Bedienfeld die Ultraschall-Hochfrequenzzerstäubungsplatte (3) ausschaltet.

2. Befeuchter mit verbesserter Steuerung nach Anspruch 1, wobei der Magnetsignalgenerator ein Reed-Schalter oder ein Hall-Sensor ist.

3. Befeuchter mit verbesserter Steuerung nach Anspruch 1, wobei die Oberseite des schwimmenden Rahmens mit einer Übertragungsstange (621) versehen ist und die Übertragungsstange zu der Bodenplatte des Wassertanks passt.

4. Befeuchter mit verbesserter Steuerung nach Anspruch 1, 2 oder 3, wobei das Ablassventil einen Ventileinsatz (51), eine Ventilstange (52), eine Druckfeder (53) und einen Ventilsitz (54) umfasst, der auf der Bodenplatte des Wassertanks angeordnet ist;
wobei der Ventilsitz eine Ventilkammer (541) mit einer oberen Öffnung und einer Wasserführungssitzplatte (542), die auf einem unteren Teil der Ventilkammer angeordnet ist, umfasst, wobei die Wasserführungssitzplatte darauf mit einem Führungsloch (5421) entlang einer axialen Linie und einem Wasserführungsloch (5422), das so angeordnet ist, dass es das Führungsloch umgibt, ausgebildet ist;
wobei die Ventilstange durch die Druckfeder und das Führungsloch verläuft, um
mit dem Ventileinsatz zu verbinden, und der Ventileinsatz zu einem oberen Ende der Ventilkammer passt; und wobei die Schwimmerbaugruppe die Ventilstange und das Ablassventil antreibt, um sich einzuschalten.

5. Befeuchter mit verbesserter Steuerung nach Anspruch 4, wobei die Schwimmerbaugruppe einen Sitzkörper (41) und einen Schwimmer (42) umfasst;
wobei der Sitzkörper mit einem Kammerkörper versehen ist, der eine obere Öffnung und eine seitliche Öffnung aufweist, und eine Seitenwandplatte an der seitlichen Öffnung mit einem Halbwellenloch (411) ausgebildet ist;
wobei der Schwimmer mit einem Drehsitz (421) versehen ist und der Drehsitz mit Halbwellen (422) an zwei Seiten davon und einer Antriebsstange (423) an einer Oberseite davon versehen ist; und
wobei sich der Drehsitz durch die seitliche Öffnung in den Sitzkörper erstreckt, die Halbwelle drehbar zu dem Halbwellenloch passt und die Antriebsstange zu der Ventilstange passt.

6. Bodenstehender Lüfter, umfassend einen Sockel (7), ein vertikales Rohr (8), einen Steuerkasten (9), einen Lüfterkopf (10), ein Nebelführungsrohr (11) und den Befeuchter nach einem der Ansprüche 1 bis 5, wobei
die Basis mit einem vertikalen Rohrsitz (24) versehen ist und sich die Basis in einer kreisförmigen Richtung zum Umfang erstreckt, um eine Sockelschale (25) mit einer unteren Öffnung zu bilden, und der Sockel in die Sockelschale eingebettet ist.

7. Bodenstehender Lüfter, umfassend einen Sockel (7), ein vertikales Rohr (8), einen Steuerkasten (9), einen Lüfterkopf (10), ein Nebelführungsrohr (11) und den Befeuchter nach einem der Ansprüche 1 bis 5, wobei der Steuerkasten einen vorderen Kastenkörper (91) mit einer hinteren Öffnung und einen hinteren Kastenkörper (92) mit einer vorderen Öffnung umfasst;
wobei der vordere Kastenkörper einen oberen Teil, der mit einem vorderen Rohrauslassloch (911) ausgebildet ist, und einen unteren Teil, der mit einem vorderen Rohreinlassloch (912) ausgebildet ist, aufweist, der hintere Kastenkörper mit einer Aussparung (921) ausgebildet ist, die eine hintere Öffnung aufweist, und die Aussparung einen unteren Teil, der mit einem hinteren Rohrauslassloch (922) ausgebildet ist, und einen oberen Teil, der mit einem hinteren Rohreinlassloch (923) ausgebildet ist, aufweist;
wobei das Nebelführungsrohr durch das vordere Rohreinlassloch in den Steuerkasten eintritt, durch das hintere Rohrauslassloch in die Aussparung eintritt und in die Aussparung eingebettet ist, durch das hintere Rohreinlassloch in den Steuerkasten eintritt und sich durch das vordere Rohrauslassloch aus dem Steuerkasten heraus erstreckt.

## Revendications

1. Humidificateur à commande améliorée, comprenant un réservoir d'eau (1), une base (2), une plaque de pulvérisation haute fréquence à ultrasons (3), un ensemble de flotteur (4), une soupape de vidange (5) et un panneau de commande, la base étant pourvue d'une chambre de pulvérisation (21) sur celle-ci, présentant une ouverture supérieure et une base de montage de plaque de pulvérisation agencée sur une plaque inférieure de la chambre de pulvérisation, la soupape de vidange étant agencée sur une plaque inférieure du réservoir d'eau, et le réservoir d'eau s'adapte de manière amovible à la chambre de pulvérisation, dans lequel la plaque inférieure de la chambre de pulvérisation est en outre pourvue d'un cadre de siège de support (22) et d'un trou de siège de ressort (23) ;
l'humidificateur comprenant en outre une plaque de siège de guidage (61), un cadre de flotteur (62), un bloc de flotteur (63), un aimant, un ressort et un générateur de signal magnétique (64), dans lequel
la plaque de siège de guidage est fixée sur le cadre de siège de support, l'aimant est pré-enchâssé dans le bloc de flotteur, le bloc de flotteur est fixé dans le cadre de flotteur, le cadre de flotteur s'adapte de manière coulissante à un trou de guidage sur la plaque de siège de guidage, une extrémité inférieure du ressort est agencée dans le trou de siège de ressort tandis qu'une extrémité supérieure s'adapte à une extrémité inférieure du cadre de flotteur, un sommet du cadre de flotteur s' adapte à la plaque inférieure du réservoir d'eau, et le générateur de signal magnétique est agencé à l'intérieur de la chambre de pulvérisation et s'adapte à l'aimant,
dans lequel,
lorsque le réservoir d'eau est séparé de la base, le générateur de signal magnétique (64) transmet un signal au panneau de commande, et le panneau de commande met hors tension la plaque de pulvérisation haute fréquence à ultrasons (3).

2. Humidificateur à commande améliorée selon la revendication 1, dans lequel le générateur de signal magnétique est un commutateur à lames souples ou un capteur à effet Hall.

3. Humidificateur à commande améliorée selon la revendication 1, dans lequel la partie supérieure du cadre de flotteur est pourvue d'une tige de transmission (621), et la tige de transmission s'adapte à la plaque inférieure du réservoir d'eau.

4. Humidificateur à commande améliorée selon la revendication 1, 2 ou 3, dans lequel la soupape de vidange comprend un noyau de soupape (51), une tige de soupape (52), un ressort de pression (53) et un siège de soupape (54) agencés sur la plaque inférieure du réservoir d'eau ;
le siège de soupape comprend une chambre de soupape (541) présentant une ouverture supérieure et une plaque de siège de guidage d'eau (542) agencée sur une partie inférieure de la chambre de soupape, la plaque de siège de guidage d'eau est formée avec un trou de guidage (5421) sur celle-ci le long d'une ligne axiale et un trou de guidage d'eau (5422) agencé autour du trou de guidage ;
la tige de soupape passe à travers le ressort de pression et le trou de guidage pour se raccorder au noyau de soupape, et le noyau de soupape s'adapte à une extrémité supérieure de la chambre de soupape ; et
l'ensemble de flotteur entraîne la tige de soupape et la soupape de vidange à se mettre en marche.

5. Humidificateur à commande améliorée selon la revendication 4, dans lequell' ensemble de flotteur comprend un corps de siège (41) et un flotteur (42) ;
le corps de siège est pourvu d'un corps de chambre présentant une ouverture supérieure et une ouverture latérale, et une plaque de paroi latérale au niveau de l'ouverture latérale est formée avec un trou de demi-arbre (411) ;
le flotteur est pourvu d'un siège rotatif(421), et le siège rotatif est pourvu de demi-arbres (422) de deux côtés de celui-ci et d'une tige d'entraînement (423) sur un sommet de celui-ci ; et
le siège rotatif s'étend dans le corps de siège à travers l'ouverture latérale, le demi-arbre s'adapte de manière rotative au trou de demi-arbre, et la tige d'entraînement s'adapte à la tige de soupape.

6. Ventilateur au sol, comprenant un socle (7), un tuyau vertical (8), un boîtier de commande (9), une tête de ventilateur (10), un tuyau de guidage de brume (11) et l'humidificateur selon l'une quelconque des revendications 1 à 5, dans lequel
la base est pourvue d'un siège de tuyau vertical (24), et la base s'étend vers la périphérie dans une direction circulaire pour former une coque de socle (25) présentant une ouverture inférieure, et le socle est enchâssé dans la coque de socle.

7. Ventilateur au sol, comprenant un socle (7), un tuyau vertical (8), un boîtier de commande (9), une tête de ventilateur (10), un tuyau de guidage de brume (11) et l'humidificateur selon l'une quelconque des revendications 1 à 5, dans lequel le boîtier de commande comprend un corps de boîtier avant (91) présentant une ouverture arrière et un corps de boîtier arrière (92) présentant une ouverture avant ;
le corps de boîtier avant présentant une partie supérieure formée avec un trou de sortie de tuyau avant (911) et une partie inférieure formée avec un trou d'entrée de tuyau avant (912), le corps de boîtier arrière est formé avec un évidement (921) présentant une ouverture arrière, et l'évidement présentant une partie inférieure formée avec un trou de sortie de tuyau arrière (922) et une partie supérieure formée avec un trou d'entrée de tuyau arrière (923) ;
le tuyau de guidage de brume pénètre dans le boîtier de commande par le trou d'entrée de tuyau avant, pénètre dans l'évidement par le trou de sortie de tuyau arrière et est enchâssé dans l'évidement, pénètre dans le boîtier de commande par le trou d'entrée de tuyau arrière et s'étend hors du boîtier de commande par le trou de sortie de tuyau avant.
